(19) Europäisches Patentamt
European Patent Office
Office européen des brevets

(11) **EP 1 388 003 B1**

(12) **EUROPÄISCHE PATENTSCHRIFT**

(45) Veröffentlichungstag und Bekanntmachung des Hinweises auf die Patenterteilung:
**24.02.2010 Patentblatt 2010/08**

(21) Anmeldenummer: **02727556.9**

(22) Anmeldetag: **12.04.2002**

(51) Int Cl.:
*G01M 3/00* *(2006.01)*

(86) Internationale Anmeldenummer:
**PCT/EP2002/004072**

(87) Internationale Veröffentlichungsnummer:
**WO 2002/095348 (28.11.2002 Gazette 2002/48)**

(54) **SYSTEM ZUR ÜBERPRÜFUNG VON SYTEMEN, DIE IHRERSEITS ZUR ÜBERPRÜFUNG DER DICHTIGKEIT EINES HOHLKÖRPERS DIENEN**

SYSTEM FOR MONITORING SYSTEMS, WHICH IN TURN MONITOR THE IMPERMEABILITY OF A HOLLOW BODY

SYSTEME POUR LE CONTROLE DE SYSTEMES SERVANT A VERIFIER L'ETANCHEITE D'UN CORPS CREUX

(84) Benannte Vertragsstaaten:
**AT BE CH CY DE DK ES FI FR GB GR IE IT LI LU MC NL PT SE TR**

(30) Priorität: **18.05.2001 DE 10124260**

(43) Veröffentlichungstag der Anmeldung:
**11.02.2004 Patentblatt 2004/07**

(73) Patentinhaber: **Boehringer Ingelheim Pharma GmbH & Co.KG**
**55216 Ingelheim am Rhein (DE)**

(72) Erfinder: **KÜHN, Torsten**
**55218 Ingelheim (DE)**

(56) Entgegenhaltungen:
**DE-U- 9 401 662**

- **PATENT ABSTRACTS OF JAPAN vol. 005, no. 096 (P-067), 23. Juni 1981 (1981-06-23) & JP 56 040712 A (TOSHIBA CORP), 17. April 1981 (1981-04-17)**
- **BASFORD J A: "LEAK CALIBRATION BY THE P V AND PRESSURE DIFFERENCE TECHNIQUES" JOURNAL OF VACUUM SCIENCE AND TECHNOLOGY: PART A, AMERICAN INSTITUTE OF PHYSICS. NEW YORK, US, Bd. 9, Nr. 6, 1. November 1991 (1991-11-01), Seiten 3153-3158, XP000236845 ISSN: 0734-2101**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein System zu Überprüfung von Systemen, die ihrerseits zur Überprüfung der Dichtigkeit eines Hohlkörpers dienen.

Anlagen und Systeme zur Überprüfung der Dichtigkeit eines Hohlkörpers arbeiten oftmals nach dem Druckhalteprinzip. Dabei wird der zu untersuchende Hohlkörper mit einem Vakuum umgeben. Bleibt das Vakuum über eine Testzeit konstant, wird der Hohlkörper als dicht angesehen. Nimmt das Vakuum hingegen ab und steigt der Druck über einen vorbestimmten festgelegten Wert, wird der Hohlkörper als undicht eingestuft.

Als Beispiele für Probanden aus dem medizinischen Bereich werden Behältnisse oder Kartuschen für medizinische Flüssigkeiten oder Dosieraerosole für Inhalationsgeräte genannt. Beispielhaft sei verwiesen auf die Druckschriften EP-0 775 076 B1, WO 00/49988, WO 97/39831 und WO 00/23037. Alle darin beschriebenen Kartuschen oder Behälter müssen als Hohlkörper auf ihre Dichtigkeit überprüft werden. Dies geschieht unter anderem nach dem schon angesprochenen Druckhalteprinzip.

Um die Kontinuität des Überprüfungsverfahrens zu gewährleisten, ist es notwendig, das System, mit welchem die Dichtigkeit des Hohlkörpers überprüft wird, selbst zu überprüfen, dahingehend, ob die gemessenen Druckerhöhungen aufgrund einer etwaigen Leckage noch zutreffend gemessen werden und ob aus den gemessenen Werten die richtigen Schlußfolgerungen gezogen werden. Es besteht also die Notwendigkeit, das Dichtigkeitsüberprüfungssystem selbst einer Prüfung zu unterziehen.

Demgemäß ist es die Aufgabe der vorliegenden Erfindung, ein Überprüfungssystem für ein derartiges Dichtigkeitsüberprüfungssystem anzugeben. Darüber hinaus soll ein entsprechender Probekörper vorgeschlagen werden, der anstelle der zu testenden Hohlkörper im System eingesetzt werden kann und aufgrund seiner Eigenschaften eine zuverlässige Aussage darüber erlaubt, ob das Dichtigkeitsüberprüfungssystem noch ordnungsgemäß funktioniert.

Gelöst wird diese Aufgabe durch das System gemäß Anspruch 1 und alternativ gemäß Anspruch 5. Die Probekörper ergeben sich aus den dem jeweiligen System zugeordneten Ansprüchen.

Demgemäß wird nach dem ersten Lösungsvorschlag ein System zur Überprüfung von Systemen, die ihrerseits zur Überprüfung der Dichtigkeit eines Hohlkörpers dienen, vorgeschlagen, bei dem anstelle des eigentlich auf die Dichtigkeit zu überprüfenden Hohlkörpers ein Probekörper in einer in zwei Kammern unterteilte Testkammer gesetzt wird, derart, daß der Probekörper mit einem Teil der mit Umgebungsluftdruck beaufschlagten ersten Kammer und mit dem anderen Teil der anderen, mit niedrigerem Luftdruck beaufschlagten zweiten Kammer ausgesetzt ist. Beide Kammern sind dabei mittels einer Dichtung voneinander getrennt. Der Probekörper erstreckt sich in dichtender Anlage durch eine in der Dichtung befindlichen Durchbrechung. Es ist also sichergestellt, daß beide Kammern druckmäßig voneinander getrennt sind. Der Probekörper weist eine definierte Leckage mit einer vorgegebenen Leckrate auf, welche jener Leckrate entspricht, die bei den eigentlichen Hohlkörpern gerade noch tolerierbar sind, um den Hohlkörper als dicht anzusehen. Aufgrund der definierten Leckage kommt es nun zu einer Druckzunahme in der zweiten Kammer mit niedrigerem Luftdruck. Diese Druckzunahme wird über eine bestimmte Zeitspanne erfaßt. Überschreitet die dabei gemessene Leckrate die vorgegebene maximale Leckrate wird daraus geschlossen, daß das Gesamtsystem nicht einwandfrei funktioniert, da dann nämlich eine zusätzliche Leckage im System aufgetreten sein muß oder die Meßgeräte funktionieren nicht mehr einwandfrei. Das Bedienungspersonal des Dichtigkeitsüberprüfungssystems kann dann entsprechend geeignete Maßnahmen ergreifen, um das Dichtigkeitsüberprüfungssystem wieder in einen ordnungsgemäßen Zustand zu bringen.

Ein erfindungsgemäßer Probekörper zur Verwendung in dem vorbeschriebenen System ist so ausgebildet, daß die vorgegebene Leckage realisiert ist durch eine Glaskapillare vorbestimmter Länge und vorgegebenen Durchmessers. Diese Glaskapillare durchtritt demnach die schon erwähnte Dichtung zwischen den beiden Kammern der Testkammer, in denen unterschiedliche Luftdrücke herrschen. Die Glaskapillare simuliert dementsprechend einen Hohlkörper, also beispielsweise eine Kartusche gemäß der oben erwähnten Druckschriften, mit einer maximal tolerierbaren Leckage. Dabei trägt im speziellen Anwendungsfall die Leckrate

der Glaskapillare $6{,}67 \times 10^{-3} \, \dfrac{mbar \times 1}{sec}$ für Umgebungsatmosphäre (Umgebungsluft).

Dieser Wert entspricht dem maximal tolerierbaren Wert für die Kartuschen oder Hohlkörper.

Aus Praktikabilitätsgründen wird die Glaskapillare vorzugsweise von einem abgeschlossenen Hohlkörper getragen.

Die vorgegebene Leckage der Glasfaser wird vorzugsweise voreingestellt durch den Durchmesser der Kapillare, so daß dieser im Bereich von max. 50 μm liegt.

Gemäß dem zweiten Lösungsvorschlag ist ein System zur Überprüfung von Systemen, die ihrerseits wiederum zur Überprüfung der Dichtigkeit eines Hohlkörpers dienen, vorgesehen, bei dem anstelle des Hohlkörpers ein Probekörper in eine Vakuumkammer gesetzt wird, wobei dem Probekörper zuvor eine definierte Feuchtigkeitsmenge zugeführt worden ist und eine Druckerhöhung in der Vakuumkammer innerhalb einer vorbestimmten Zeitspanne gemessen wird. Überschreitet diese gemessene Druckerhöhung eine vorgegebene maximale Druckerhöhung, so wird auf eine Fehlfunktion des Dichtigkeitsüberprüfungssystem geschlossen.

Grundlage für dieses System ist, daß der Prüfkörper aus einem Werkstoff besteht, der bei Lagerung definiert Feuchtigkeit aus der Umgebungsatmosphäre aufnehmen kann. Die Menge der aufnehmbaren Feuchtigkeit kann unter anderem durch die Größe der Oberfläche des Prüfkörpers beeinflußt werden.

Um den Prüfkörper herum wird nun ein Vakuum in der Vakuumkammer erzeugt. Während der Testzeit wird dem Prüfkörper nun Feuchtigkeit entzogen und im Vakuum wenigstens teilweise verdampft. Diese Verdampfung erhöht dabei den Druck in der Vakuumkammer. In Abhängigkeit von der Zeitspanne und von der aufgenommenen Flüssigkeitsmenge wird so ein definierter Druckanstieg in der Vakuumkammer erzeugt. Dieser korreliert mit einem gerade noch tolerierbaren Druckanstieg bei dem auf Dichtigkeit zu überprüfenden Hohlkörper, dem eigentlichen Proband des Dichtigkeitsüberprüfungssystems.

Beiden Systemen ist gemeinsam, daß das eigentliche Dichtigkeitsüber- prüfungssystem dadurch geeicht wird, daß die gerade noch tolerierbaren Leckagen simuliert und im eigentlichen Testverfahren eine Überschreitung des Druckanstiegs ein eindeutiges Indiz für zusätzliche Leckagen oder sonstige Fehlfunktionen des Systems ist.

Wie schon erwähnt, besteht der Prüfkörper bei dem System gemäß dem zweiten Lösungsvorschlag aus einem speziellen Werkstoff. In Betracht kommen Werkstoffe, die eine relativ hohe Aufnahme einer Feuchtigkeit, beispielsweise Wasser, aufweisen. Es wird an Polyamid oder Polyoxymethyl gedacht.

Ein großer Vorteil aller vorgeschlagenen Probekörper ist darin zu sehen, daß diese nach einer Erholungszeit wiederverwendet werden können. Während der Erholungszeit des Probekörpers für das System gemäß dem ersten Lösungsvorschlag findet ein Druckausgleich mit der Umgebung nach dem Test statt. Bei den Probekörpern für das System gemäß dem zweiten Lösungsvorschlag findet eine Wiederaufnahme von Feuchtigkeit aus der Umgebung bei konstantem Klima nach dem Test statt.

Die Erfindung wird anhand zweier Ausführungsbeispiele schematisch näher erläutert. Hierbei zeigt:

Fig. 1    schematisch das System gemäß dem ersten Lösungsvorschlag in der Vorbereitung der Überprüfung des Dichtigkeitsüberprüfungs- systems,

Fig. 2    das einsatzbereite System gemäß dem ersten Lösungsvorschlag,

Fig. 3    das System aus Fig. 2 während des Tests, und

Fig. 4    das System gemäß dem zweiten Lösungsvorschlag.

Nachfolgend bezeichnen gleiche Bezugszeichen dieselben Teile.

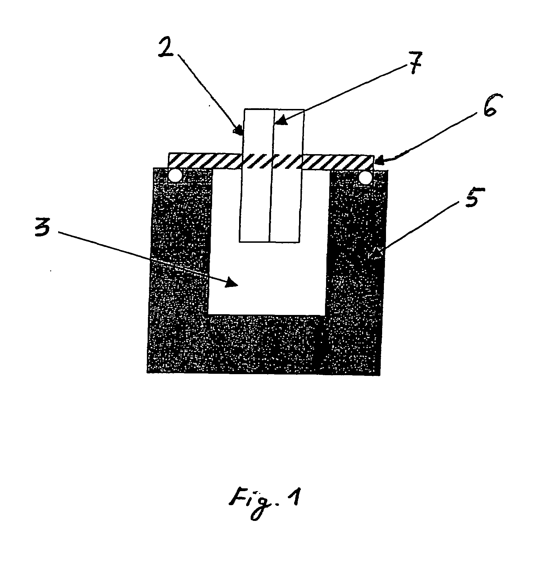

Fig. 1 zeigt schematisch das erste System. Es besteht im wesentlichen aus der Testkammer 5, in welcher, nachdem das Dichtigkeitsüberprüfungssystem als einsatzbereit erkannt worden ist, der eigentliche Probant, nämlich der Hohlkörper, gesetzt wird. Zur Überprüfung dieses Systems aber findet der Probekörper 2 Anwendung. Der Probekörper 2 erstreckt sich durch eine Dichtung 6, mit welcher der untere Teil der Testkammer 5 abgedichtet wird und so eine erste Testkammer 3 abtrennt, in welcher im allgemeinen der Umgebungsluftdruck herrscht.

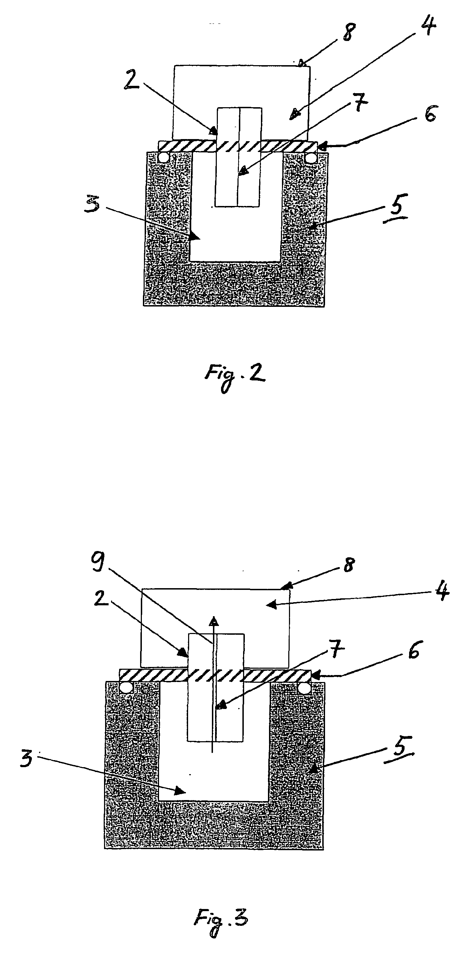

Der Probekörper 2 besteht vorliegend aus einem Hohlkörper und einem definierten Leck, welches realisiert ist durch eine Glaskapillare 7 bestimmter Länge und bestimmten Durchmessers. Zur Durchführung des Tests nun wird, wie in Fig. 2 gezeigt, eine Saugglocke 8 auf die Dichtung 6 gesetzt und der so definierte Raum evakuiert, solange, bis der darin befindliche Druck beispielsweise etwa 1 mbar beträgt. Die Saugglocke 8 umgrenzt die zweite Kammer 4 der Testkammer 5. Beträgt der Luftdruck in der ersten Kammer 3 ca. 1000 mbar und in der zweiten Kammer 4 etwa 1 mbar, so beträgt die Druckdifferenz zwischen beiden Kammern 999 mbar. Dies führt zusammen mit der Glaskapillare 7 des Probekörpers 2 dazu, daß innerhalb einer vorbestimmten Zeitdauer ein gewisser Druckausgleich zwischen den Kammern 3 und 4 stattfindet. Die ist schematisch in Fig. 3 angedeutet, wo der Luftstrom durch die Glaskapillare 7 durch den Pfeil 9 angedeutet ist.

Die Glaskapillare 7 ist so dimensioniert, daß die Leckrate eine Leckrate entspricht, die bei den zu überprüfenden Hohlkörpern eine gerade noch akzeptable Leckage indiziert.

Die Leckrate wird durch (nicht dargestellt) Sensoren ermittelt. Übersteigt die Leckrate einen vorgegebenen Wert, so wird daraus geschlossen, daß das System als solches nicht den Anforderungen entspricht, um weiter im Dichtigkeitsüberprüfungsverfahren eingesetzt zu werden. Zusätzliche Leckagen sind dann die Hauptursache für eine Fehlfunktion.

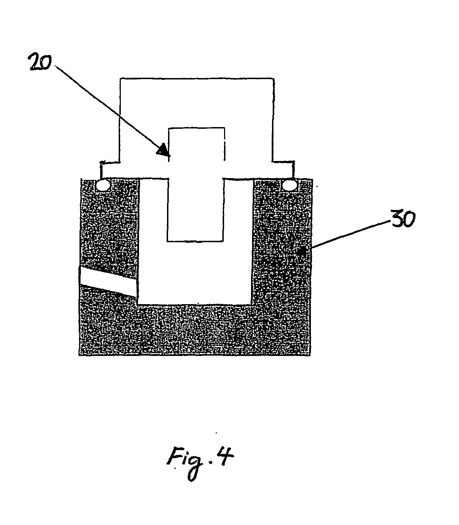

Die Fig. 4 zeigt das zweite vorgeschlagene System schematisch. In einer Vakuumkammer 30 ist ein Probekörper 20 gesetzt. Um diesen Prüfkörper herum wird in der Vakuumkammer 30 ein Vakuum erzeugt. Daraufhin wird während der Prüfphase dem Prüfkörper 20 Feuchtigkeit entzogen und im Vakuum wenigstens teilweise verdampft. Diese Verdampfung erhöht den Druck in der Vakuumkammer 30, der durch (nicht dargestellt) Sensoren erfaßt werden kann. Dieser Druckanstieg entspricht jenem, welcher gerade noch tolerabel ist bei den Hohlkörpern, die dann im Dichtigkeitsüberprüfungssystem auf ihre Dichtigkeit hin überprüft werden.

**Patentansprüche**

1.    System zur Überprüfung von Systemen, die ihrerseits zur Überprüfung der Dichtigkeit eines Hohlkörpers dienen, bei dem anstelle des Hohlkörpers ein Probekörper (2) in eine in zwei Kammern (3, 4) unterteilte Testkammer (5) gesetzt wird, derart, daß der Probekörper (2) mit einem Teil der mit Umgebungsluftdruck beaufschlagten ersten Kammer (3) und mit einem anderen Teil der anderen, mit niedrigerem Luftdruck beaufschlagten zweiten Kammer (4) ausgesetzt ist, wobei beide Kammern (4) mittels einer Dichtung (6) voneinander getrennt sind und der Probekörper (2) in dichtender Anlage sich durch eine darin befindliche Durchbrechung erstreckt und der Probekörper (2) eine definierte Leckage mit vorgegebener Leckrate aufweist, die Druckzunahme in der zweiten Kammer (4) über eine vorbestimmte Zeitspanne erfaßt wird und bei Überschreitung der gemessenen Leckrate über die vorgegebene Leckrate auf eine Fehlfunktion des Dichtigkeitsüberprüfungssystems geschlossen wird.

2. Probekörper zur Verwendung in dem System nach Anspruch 1, bei dem die vorgegebene Leckage realisiert ist durch eine Glaskapillare (7) vorbestimmter Länge und vorgegebenen Durchmessers.

3. Probekörper nach Anspruch 2, bei dem die Leckrate der Glaskapillare (7) $6{,}67 \times 10^{-3}\ \dfrac{\text{mbar} \times l}{\text{sec}}$ unter Umgebungsatmosphäre (Umgebungsluft) beträgt.

4. Probekörper nach Anspruch 2 oder 3, bei dem die Glaskapillare (7) einen Durchmesser im Bereich von max. 50 μm aufweist.

5. System zur Überprüfung von Systemen, die ihrerseits zur Überprüfung der Dichtigkeit eines Hohlkörpers dienen, bei dem anstelle des Hohlkörpers ein Probekörper (20) in eine Vakuumkammer (30) gesetzt wird, wobei dem Probekörper (20) zuvor eine definierte Feuchtigkeitsmenge zugeführt worden ist, und eine Druckerhöhung in der Vakuumkammer (30) innerhalb einer vorbestimmten Zeitspanne gemessen wird und bei Überschreitung der gemessenen Druckerhöhung über eine vorgegebene maximale Druckerhöhung auf eine Fehlfunktion des Dichtigkeitsüberprüfungssystems geschlossen wird.

6. Probekörper zur Verwendung in dem System nach Anspruch 5, der aus Polyamid mit definierter Größe der Oberfläche besteht.

7. Probekörper nach Anspruch 6, der aus Polyoxymethylen (POM) mit definierter Größe der Oberfläche besteht.

**Claims**

1. System for monitoring systems, which in turn serve to monitor the impermeability of a hollow body, wherein instead of the hollow body a test specimen (2) is placed in a test chamber (5) subdivided into two chambers (3, 4) such that one part of the test specimen (2) is exposed to the first chamber (3) that is subjected to ambient air pressure and another part is exposed to the other, second chamber (4) that is subjected to lower air pressure, the two chambers (4) being separated from one another by a seal (6) and the test specimen (2) extending in a sealing position of abutment through an opening provided therein, and the test specimen (2) having a defined leakage with a preset leak rate, the increase in pressure in the second chamber (4) being detected over a predetermined time span and in the event that the leak rate measured exceeds the preset leak rate, a malfunction of the impermeability monitoring system is assumed.

2. Test specimen for use in the system according to claim 1, wherein the preset leakage is achieved by means of a glass capillary (7) of a predetermined length and a given diameter.

3. Test specimen according to claim 2, wherein the leak rate of the glass capillary (7) is $6.67 \times 10^{-3}\ \dfrac{\text{mbar} \times l}{\text{sec}}$ at ambient atmosphere (ambient air).

4. Test specimen according to claim 2 or 3, wherein the glass capillary (7) has a diameter in the region of max. 50 μm

5. System for monitoring systems, which in turn serve to monitor the impermeability of a hollow body, wherein instead of the hollow body a test specimen (20) is placed in a vacuum chamber (30), the test specimen (20) having previously been supplied with a defined quantity of moisture, and a pressure increase in the vacuum chamber (30) is measured within a predetermined time span and in the event that the pressure increase measured exceeds a preset maximum pressure increase, a malfunction of the impermeability monitoring system is assumed.

6. Test specimen for use in the system according to claim 5, which consists of polyamide with a surface area of a defined size.

7. Test specimen according to claim 6, which consists of polyoxymethylene (POM) with a surface area of a defined size.

**Revendications**

1. Système pour le contrôle de systèmes servant à vérifier l'étanchéité d'un corps creux, pour lequel à la place du corps creux, une éprouvette (2) est placée dans une chambre test (5) divisée en deux chambres (3, 4) de telle sorte que l'éprouvette (2) soit exposée avec une partie à la première chambre (3) sollicitée par une pression d'air ambiant et avec une autre partie à l'autre seconde chambre (4) sollicitée par une pression d'air plus faible, les deux chambres (4) étant séparées l'une de l'autre au moyen d'un joint (6) et l'éprouvette (2) s'étendant de façon étanche au travers d'un trou se trouvant dedans, et l'éprouvette (2) présentant une fuite définie avec un taux de fuite prédéfini, l'augmentation de pression dans la seconde chambre (4) étant détectée sur un intervalle de temps prédéfini et, en cas de dépassement du taux de fuite mesuré au-dessus du taux de fuite prédéfini, étant conclu à un fonctionnement erroné du système de vérification de l'étanchéité.

2. Éprouvette pour l'utilisation dans le système selon la revendication 1, pour laquelle la fuite prédéfinie est réalisée par un capillaire en verre (7) de longueur prédéterminée et de diamètre prédéfini.

3. Éprouvette selon la revendication 2, pour laquelle le taux de fuite du capillaire en verre (7) s'élève à 6,67 x $10^{-3}$ mbar/s x L sous atmosphère ambiante (air ambiant).

4. Éprouvette selon la revendication 2 ou 3, pour laquelle le capillaire en verre (7) présente un diamètre dans la plage de 50 μm maximum.

5. Système pour le contrôle de systèmes servant à vérifier l'étanchéité d'un corps creux, pour lequel à la place du corps creux, une éprouvette (20) est placée dans une chambre à vide (30), un taux d'humidité défini ayant été amené précédemment dans l'éprouvette (20), et une augmentation de la pression étant mesurée dans la chambre à vide (30) dans un intervalle de temps prédéfini et, en cas de dépassement de l'augmentation de pression mesurée au-dessus d'une augmentation de pression maximale prédéfinie, étant conclu à un fonctionnement erroné du système de vérification de l'étanchéité.

6. Éprouvette pour l'utilisation dans le système selon la revendication 5, qui se compose de polyamide avec une grandeur de surface définie.

7. Éprouvette selon la revendication 6, qui se compose de polyoxyméthylène (POM) avec une grandeur de surface définie.

Fig. 1

Fig. 2

Fig. 3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0775076 B1
- WO 0049988 A
- WO 9739831 A
- WO 0023037 A